Europäisches Patentamt

European Patent Office

Office européen des brevets

(11) Veröffentlichungsnummer: **0 240 765**
**A2**

## (12) EUROPÄISCHE PATENTANMELDUNG

(21) Anmeldenummer: **87103570.5**

(22) Anmeldetag: **12.03.87**

(51) Int. Cl.³: **B 23 B 51/06**

(30) Priorität: **09.04.86 DE 3611998**

(43) Veröffentlichungstag der Anmeldung:
**14.10.87 Patentblatt 87/42**

(84) Benannte Vertragsstaaten:
**CH DE ES FR GB IT LI SE**

(71) Anmelder: **Firma Gottlieb Gühring**
**Herderstrasse 50-54**
**D-7470 Albstadt 1-Ebingen(DE)**

(72) Erfinder: **Reinauer, Josef**
**Weidenweg 23**
**D-7480 Sigmaringen 3(DE)**

(74) Vertreter: **Winter, Konrad Theodor, Dipl.-Ing. et al,**
**Patentanwaltsbüro Tiedtke- Bühling- Kinne- Grupe-**
**Pellmann- Grams- Struif- Winter- Roth Bavariaring 4**
**D-8000 München 2(DE)**

(54) **Vollhartmetall-Spiralbohrer mit innenliegenden Kühlkanälen.**

(57) Ein Spiralbohrer mit innenliegenden Kühlkanälen umfaßt ein Schaft- und Schneidteil. Das Schneidteil weist zumindest zwei wendelförmige Spannuten auf, die einen Spanraum ausbilden, und ist insgesamt aus Hartmetall hergestellt. Die Spannuten verlaufen über die gesamte Länge des Schneidteils. Der ebenfalls spannutentragende, der Bohrerspitze entgegengesetzte Endabschnitt des Schneidteils ist mit seiner Stirnfläche mit einer am der Bohrerspitze zugewandten Endabschnitt des Schaftteils ausgebildeten Stirnfläche verbunden. Die Kühlkanäle im Schneid- und Schaftteil sind mittels verlöteter Passungsflächen zwischen dem Schneid- und Schaftteil gegen den Spanraum abgedichtet.

Fig.6

TIEDTKE - BÜHLING - KINNE - GRUPE
PELLMANN - GRAMS - STRUIF

Patentanwälte und
Vertreter beim EPA

Dipl.-
Dipl.-
Dipl.-
Dipl.-
Dipl.-
Dipl.-Ing. K. Grams
Dipl.-Chem. Dr. B. Struif

Bavariaring 4, Postfach 20 24 03
8000 München 2
Tel.: 089 - 53 96 53
Telex: 5-24 845 tipat
Telecopier: 0 89 -537377
cable: Germaniapatent München

**0240765**

12. März 1987
EP 6584

Firma Gottlieb Gühring

7470 Albstadt 1-Ebingen, BRD


Vollhartmetall-Spiralbohrer mit innenliegenden Kühlkanälen


Die Erfindung bezieht sich auf einen Spiralbohrer mit innenliegenden Kühlkanälen nach dem Oberbegriff des Patentanspruchs 1.

Derartige Spiralbohrer aus Schnellstahl sind bereits bekannt, um hohe Schnittleistungen zu erzielen. In der Ausführung aus Schnellstahl können das Schaft- und das Schneidteil einstückig ausgebildet sein, wodurch sich jedoch herstellungstechnische Schwierigkeiten ergeben können, da Schaft- und Schneidteil eine unterschiedliche Werkstoffbehandlung erfordern. In der Ausführung als Spiralbohrer mit einem kombinierten Schaft- und Trägerteil, wobei an das Trägerteil eine Hartmetall-Schneidspitze angebracht wird, können sich Schwierigkeiten beim Anschluß der in der Schneidspitze ausgebildeten Kühlkanäle an dieses Schaft- bzw. Trägerteil ergeben. Des weiteren sind bei der letztgenannten Ausführung die Nachschleifmöglichkeiten stark eingeschränkt.

Der Erfindung liegt die Aufgabe zugrunde, leistungsfähige Spiralbohrer derart zu konzipieren, daß sie einfach hergestellt werden können und dennoch wesentlich höhere Schnittleistungen aufweisen.

Diese Aufgabe wird erfindungsgemäß mit den Merkmalen im kennzeichnenden Teil des Patentanspruchs 1 gelöst. Die erfindungsgemäße Konzeption des Spiralbohrers erlaubt eine Herstellung desselben aus zwei separat vorgefertigten Teilen - nämlich dem in voller Länge mit Spannuten ausgestalteten Schneidteil und dem Schaftteil -, wodurch keine Unterbrechung des Nutungsvorgangs notwendig ist. Somit kann ein zylindrischer Werkstoffstrang in beliebiger Länge genutet werden, wobei dieser Strang danach oder auch schon während des Nutungsvorgangs in gewünschte Teilabschnitte aufteilbar ist. Beim Zusammenbau von Schaft- und Schneidteil ist eine sichere Abdichtung der Kühlkanäle gegen den Spanraum durch vergleichsweise einfache Maßnahmen an den Passungsflächen zwischen Schneid- und Schaftteil erreichbar. Da die Übertragung des Drehmoments von Schaftzu Schneidteil bei gemäß Patentanspruch 2 ausgebildeten Spiralbohrern ohnehin bevorzugterweise über die Außenflächen der Bohrerstege erfolgt, die mit den Innenflächen des Schaftteils verlötet werden, ergibt sich hieraus kein spürbarer herstellungstechnischer Mehraufwand. Zudem entsteht bei der Verlötung an den Kanten der Bohrerstege eine ein wenig in die Nuten vorstehende Wulst aus Lötmaterial, wodurch die Drehmomentübertragung weiter verbessert wird. Des weiteren ist nach Ende der Lebensdauer des Schneidteils dasselbe ohne unzumutbaren Aufwand vom Schaftteil demontierbar, womit das letztere weiterbenutzt werden kann. Eine längere Standzeit des Spiralbohrers insgesamt ergibt sich daraus, daß das Schneidteil praktisch bis an seinen Eintritt ins Schaftteil nachgeschliffen werden kann.

Durch die Ausbildung gemäß Patentanspruch 3 wird der Zusammenbau und die Demontage des Spiralbohrers erheblich vereinfacht. Es hat sich gezeigt, daß die Verlötung über die Außenflächen der Bohrerstege bei geeigneter Wahl der Abmessungen der Passungsflächen ausreicht, um selbst höchste Drehmomente zu übertragen.

Eine Abdichtung gemäß Patentanspruch 4 verhindert, daß überhaupt Kühlmittel in den durch die Spannuten gebildeten Hohlraum eintreten kann.

Die Auslegung von Anordnung und Abmessungen gemäß Patentanspruch 5 vereinfacht wesentlich den Anschluß der Kühlkanäle des Schneidteils an den des Schafteils.

Durch die Anordnung eines Kühlkanalübergangselements gemäß Patentanspruch 6 bzw. 7 zwischen Schaft- und Schneidteil erübrigen sich überhaupt besondere Maßnahmen an Schaft- oder Schneidteil, wobei die in den einzelnen Teilen ausgestalteten Kühlkanäle unabhängig voneinander gestaltet werden können.

Zur Erleichterung des Anschlusses der Kühlkanäle des Schneidteils an die des Kühlkanalübergangselements bzw. die des Schaftteils kann die in der Ausnehmung angeordnete Stirnfläche des Schneidteils gemäß Patentanspruch 8 mit einer Vertiefung ausgestaltet werden, die die Öffnungsflächen der Kühlkanäle als radiale Kanalquerverbindung miteinander verbindet.

Alternativ hierzu kann es sinnvoll sein, das Kanalübergangselement gemäß Patentanspruch 9 zu schlitzen und ansonsten im wesentlichen zu Abdichtungs- und Kraftübertragungszwecken zu nutzen.

Das Einbringen von Klebstoff gemäß Patentanspruch 10 zwischen Schaft- und Schneidteil im Öffnungsbereich der Ausnehmung erhöht die Festigkeit zwischen Schneid- und Schaftteil, und verhindert, daß Späne in die Ausnehmung eindringen.

Der Spiralbohrer in der im Patentanspruch 11 beanspruchten Ausgestaltung ermöglicht einen weitgehend kontinuierlichen, gleichmäßigen Kraftfluß vom Schaft- in das Schneidteil, wobei diese Wirkung gemäß Patentanspruch 12 noch verstärkt wird.

Mittels der Trennplatte gemäß Patentanspruch 13 wird eine Kraftübertragung durch Formschluß ermöglicht, ohne daß die Ausnehmung im Schaftteil insgesamt oder teilweise entsprechend gestaltet werden muß. Je nach Art und Weise der Herstellung kann die Trennplatte gemäß Patentanspruch 14 einstückig mit dem Schaftteil ausgebildet oder gemäß Patentanspruch 15 separat ausgebildet und fest mit dem Schaftteil verbunden sein.

Eine Ausbildung gemäß einem der Patentansprüche 16 bis 20 erlaubt aufgrund des dort auftretenden Formschlusses in Umfangsrichtung des Spiralbohrers eine erhebliche Verkleinerung der zur Drehmomentübertragung erforderlichen Fläche, wobei diese durch die Ausbildung der Schlitzausnehmungen bzw. der Anschlußkanalabschnitte zum Anschluß der Kühlkanäle des Schneidteils an die des Schaftteils nur geringfügig vergrößert wird.

Die Ausbildung gemäß Patentanspruch 21 oder 22 sichert, daß die Ausnehmung und insbesondere die in ihr zur Kraftübertragung wirkenden Teileelemente einfach und mit großer Fertigungsgenauigkeit herstellbar sind.

Die Erfindung wird nunmehr anhand von Ausführungsformen unter Bezugnahme auf die Zeichnung näher erläutert. Es zeigen:

Fig. 1 den Spiralbohrer in Draufsicht im zusammengebauten Zustand;

Fig. 2 das Schneidteil des Spiralbohrers in Draufsicht;

Fig. 3 das Schneidteil im Querschnitt;

Fig. 4 das Schaftteil im Axialschnitt;

Fig. 5 eine Darstellung des Schnitts V-V in Fig. 1;

Fig. 6 eine Explosionsdarstellung des Spiralbohrers in einer zweiten Ausführungsform;

Fig. 7 einen Axialschnitt eines Ausführungsbeispiels des Schaftteils der zweiten Ausführungsform des Spiralbohrers;

Fig. 8 einen Axialschnitt eines weiteren Ausführungsbeispiels des Schaftteils der zweiten Ausführungsform des Spiralbohrers;

Fig. 9 einen Axialschnitt durch den den Endabschnitt des Schneidteils aufnehmenden Abschnitt eines dritten Ausführungsbeispiels des Schaftteils der zweiten Ausführungsform des Spiralbohrers;

Fig. 10 eine Darstellung der Verbindung zwischen Schaft- und Schneidteil des Spiralbohrers;

Fig. 11 eine Vorderansicht des in Fig. 10 gezeigten Kühlkanalübergangselements;

Fig. 12 eine Fig. 10 entsprechende Darstellung einer anderen Verbindung;

Fig. 13 eine Fig. 11 entsprechende Darstellung des in Fig. 12 gezeigten Kühlkanalübergangselements;

Fig. 14 eine Fig. 10 entsprechende Darstellung einer weiteren Verbindung;

Fig. 15 eine Fig. 11 entsprechende Darstellung des in Fig. 14 gezeigten Kühlkanalübergangselements;

Fig. 16 eine Darstellung einer radialen Kanalquerverbindung;

Fig. 17 eine Darstellung einer anders gestalteten Kanalquerverbindung;

Fig. 18 eine Darstelung der Verbindungsstelle zwischen Schneid- und Schaftteil, wobei beide den gleichen Durchmesser haben;

Fig. 19 eine Ansicht des Schaftteils einer vierten Ausführungsform des Spiralbohrers;

Fig. 20 einen Schnitt A-A aus Fig. 19, wobei zusätzlich der Endabschnitt des Schneidteils dargestellt ist;

Fig. 21 einen Schnitt B-B aus Fig. 20;

Fig. 22 eine Ansicht des Schaftteils einer fünften Ausführungsform des Spiralbohrers;

Fig. 23 einen Schnitt A-A aus Fig. 22, wobei zusätzlich der Endabschnitt des Schneidteils dargestellt ist;

Fig. 24 eine Explosionsdarstellung des Übergangsbereichs des Spiralbohrers aus Fig. 22 und 23; und

Fig. 25 eine Explosionsdarstellung eines Übergangsbereichs des Spiralbohrers, bei dem zwei Anschlußkanalabschnitte vorgesehen sind.

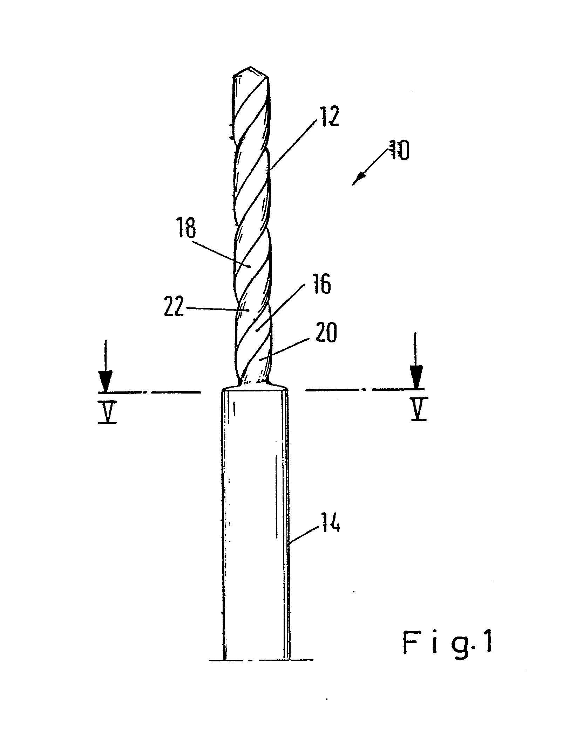

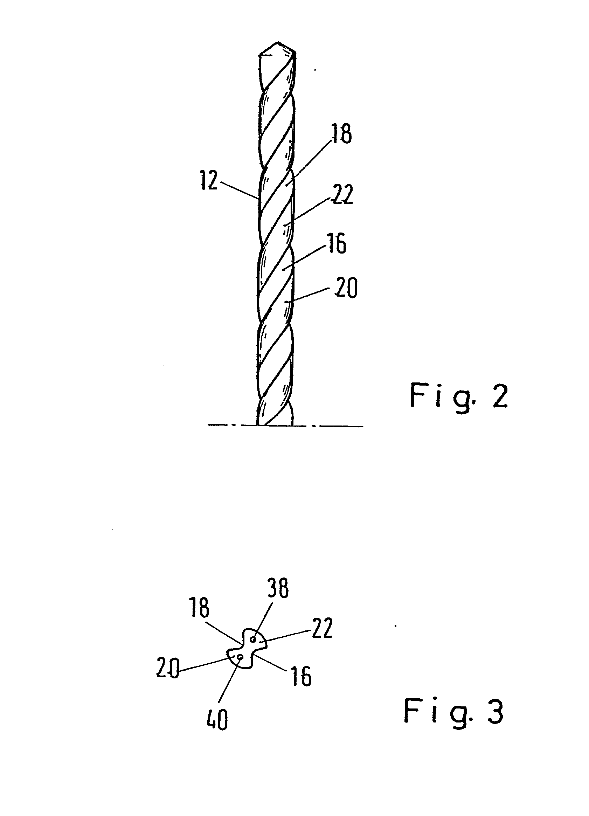

Ein in den Figuren 1 bis 4 dargestellter Spiralbohrer 10 gliedert sich im wesentlichen in zwei Abschnitte, nämlich ein Schneidteil 12 und ein Schaftteil 14.

Das Schneidteil 12 ist vollständig aus Hartmetall hergestellt und bei der dargestellten Ausführungsform mit zwei Spannuten 16, 18 versehen, die sich auf der Mantelfläche des Schneidteils 12 um 180° versetzt gegenüberliegen und einen Spanraum ausfüllen, durch den das Bohrklein aus dem Bohrlochtiefsten abgefördert wird.

Die Spannuten 16, 18 schließen zwei Bohrerstege 20, 22 ein, in denen jeweils radial auswärts des Bohrerkerns ein Kühlkanal 38, 40 verläuft. Die Außenflächen der Bohrerstege 20, 22 haben Fasen, durch die das Schneidteil 12 des Spiralbohrers 10 innerhalb eines Bohrlochs geführt bzw. zentriert wird.

Zur Kraftübertragung auf das Schneidteil 12 dient das Schaftteil 14, das mit einer Ausgangswelle der Bohrmaschine drehfest verbindbar ist.

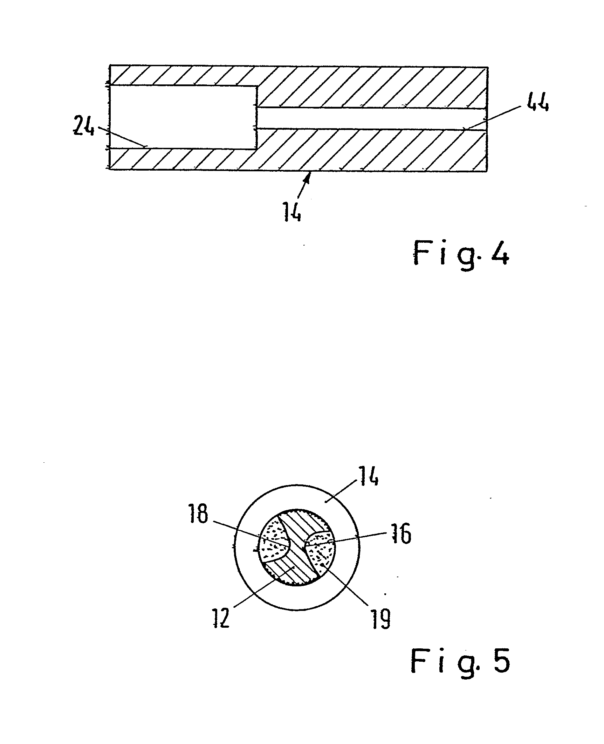

Zur Verbindung de Schneidteils 12 mit dem Schaftteil 14 ist das letztere mit einer Ausnehmung 24 ausgestaltet, deren Innendurchmesser etwa mit dem Außendurchmesser des Schneidteils 12 übereinstimmt. Im Bereich der Öffnungsfläche der Ausnehmung 24 ist die Mantelfläche des Schneidteils 12 mit der Innenwandung der Ausnehmung 24 im Schaftteil 14 verbunden, wie in Figur 5 dargestellt. Hierbei sind die Fasen mit der Innenwand der Ausnehmung 24 verlötet und in die Spannuten ist nahe der Öffnungsfläche Klebstoff 19 eingebracht. Diese Klebverbindung dient dazu, über die gesamte Standzeit des Spiralbohrers 10 die durch die Spannuten 16, 18 gebildeten Hohlräume im Bereich der Öffnungsfläche auszufüllen, um ein Einlaufen von Spänen in die Ausnehmung 24 des Schaftteils 14 zu verhindern.

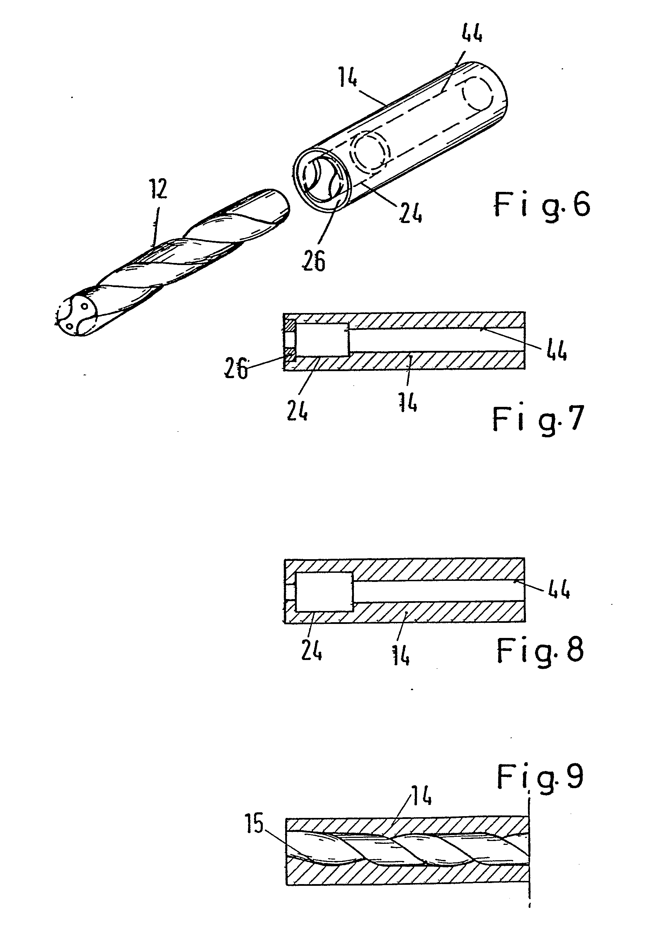

Bei einer zweiten Ausführungsform der Erfindung, die in Figur 6 dargestellt ist, ist die Öffnungsfläche der Ausnehmung 24 mittels einer Trennplatte 26 verschlossen. Die Trennplatte 26 ist mit einer Aussparung ausgebildet, die in ihrem Querschnitt dem des Schneidteils 12 entspricht. Das Schneidteil 12 wird mit seinem der Bohrerspitze abgewandten Endabschnitt durch die Trennplatte 26 mit einer entsprechenden durch den Formschluß zwischen Schneidteil 12 und Trennplatte 26 erzwungenen Rotationsbewegung axial in die Ausnehmung 24 hineingeschoben, bis es mit seinem Ende gegen den Grund der Ausnehmung 24 stößt. Bei dieser Ausführungsform wird die Antriebsenergie vom Schaftteil 14 im wesentlichen mittels des Form- und Kraftschlusses zwischen der fest mit dem Schaftteil 14 verbundenen Trennplatte 26 und dem Schneidteil 12 weitergeleitet. Die Lötverbindung zwischen den entsprechenden, noch zu beschreibenden, im Grund der Ausnehmung 24 aneinanderliegenden Passungsflächen verhindert den Austritt von Kühlmedium in den Spanraum. Die chemische Resistenz dieser Lötverbindung muß ausreichen, um über die gesamte Standzeit des Schneidteils 12 des Spiralbohrers 10 dem Kühlmedium widerstehen zu können.

Statt wie in Figur 7, die die Trennplatte 26 als separates, mit dem Schaftteil 14 fest verbundenes Element zeigt, kann das Schaftteil 14 auch einstückig mit einem in seinem Querschnitt mit dem der Trennplatte 26 übereinstimmenden, radial nach innen vorstehenden Ringvorsprung 28 ausgebildet sein, wie im Längsschnitt in Figur 8 dargestellt.

Figur 9 zeigt das Schaftteil 14 des Spiralbohrers 10, welches mit einem entsprechend der Gestalt des Schneidteils ausgebildeten Innengewindeabschnitt 15 versehen ist, so daß die gesamte axiale Überlappungslänge zwischen Schneid- 12 und Schaftteil 14 zur gleichmäßigen Übertragung der Antriebsleistung nutzbar ist.

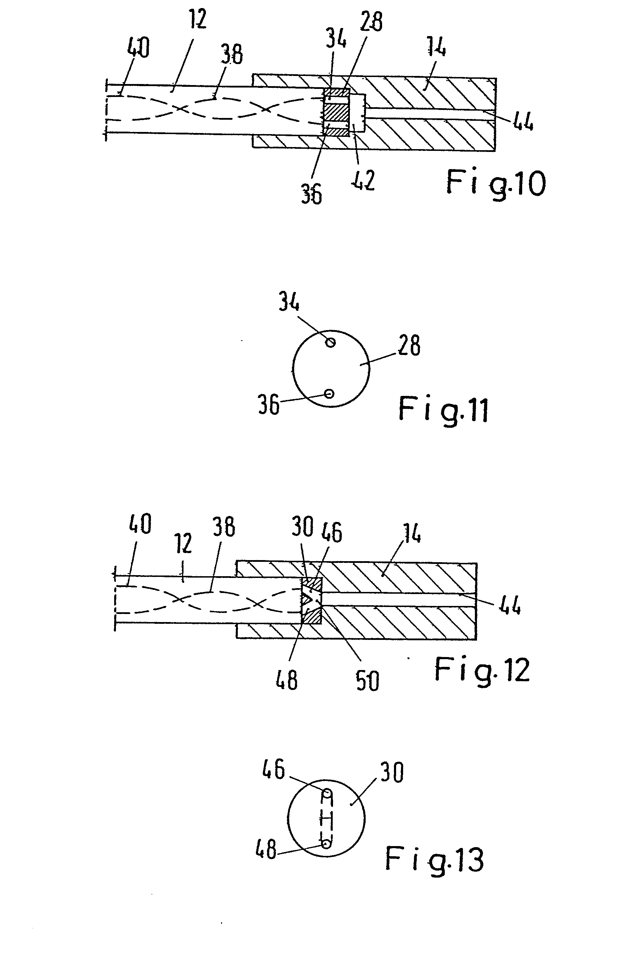

Die Figuren 10 bis 15 zeigen Ausführungsbeispiele für den Anschluß zwischen den Kühlkanälen 38, 40 des Schneidteils 12 an den Kühlkanal 44 des Schaftteils 14 sowie für die Abdichtung dieser Verbindungen. Zwischen der der Bohrerspitze abgewandten Stirnseite des Schneidteils 12 und dem Grund der Ausnehmung 24 im Schaftteil 14 ist jeweils ein Kühlkanalübergangselement 28, 30, 32 angeordnet. Dieses Kühlkanalübergangselement 28, 30, 32 ist fluiddicht sowohl mit dem Schaftteil 14 als auch mit dem Schneidteil 12 verbunden. Daher entfallen weitere Maßnahmen zur Abdichtung zwischen Kühlkanälen und Spanraum. Da die zur Kraftübertragung dienenden Verbindungsflächen zwischen Schaft- 14 und Schneidteil 12 dem Kühlmedium nicht ausgesetzt sind, können sie entsprechend wenig aufwendig ausgeführt werden, bzw. - bei Übertragung des Drehmoments durch Form- bzw. Kraftschluß - unter bestimmten Voraussetzungen sogar entfallen.

Das in Figur 10 und 11 dargestellte Kühlkanalübergangselement 28 weist zwei separate Kühlkanalabschnitte 34, 36 auf, die zueinander parallel und in Axialrichtung des Spiralbohrers 10 verlaufen und somit die Kühlkanäle 38, 40 des Schneidteils 12 separat mit einer Erweiterung 42 des Endes des Kühlkanals 44 im Schaftteil 14 verbinden.

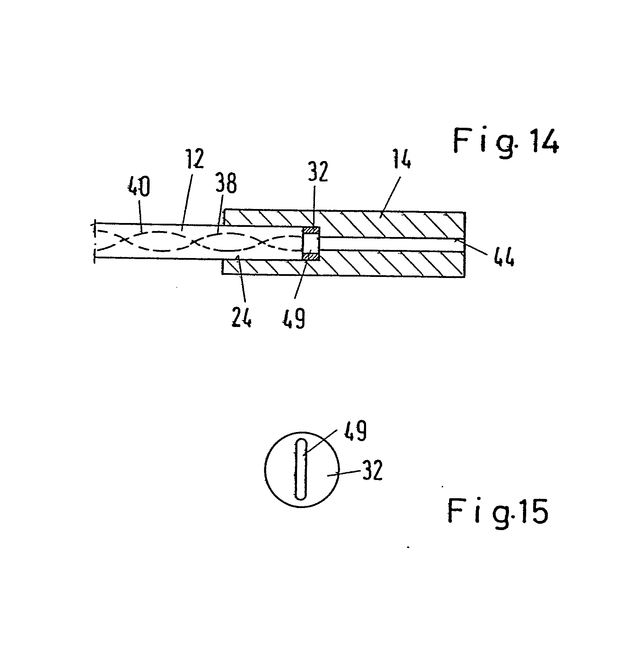

Das in den Figuren 12 und 13 gezeigte Kühlkanalübergangselement 30 hat zwei gegeneinander geneigte Kühlkanalabschnitte 46, 48, die jeweils von einem gemeinsamen Anschluß 50 an den Kühlkanal 44 des Schaftteils 14 zu den Öffnungsflächen der Kühlkanäle 38, 40 des Schneidteils 12 verlaufen.

Die Figuren 14 und 15 zeigen ein Kühlkanalübergangselement 32 mit einem Schlitz 49, durch den der gesamte Mittelabschnitt der in der Ausnehmung 24 befindlichen Stirnseite des Schneidteils 12 und damit beide Öffnungsflächen der Kühlkanäle 38, 40 des Schneidteils 12 an den Kühlkanal 44 des Schaftteils 14 angeschlossen sind.

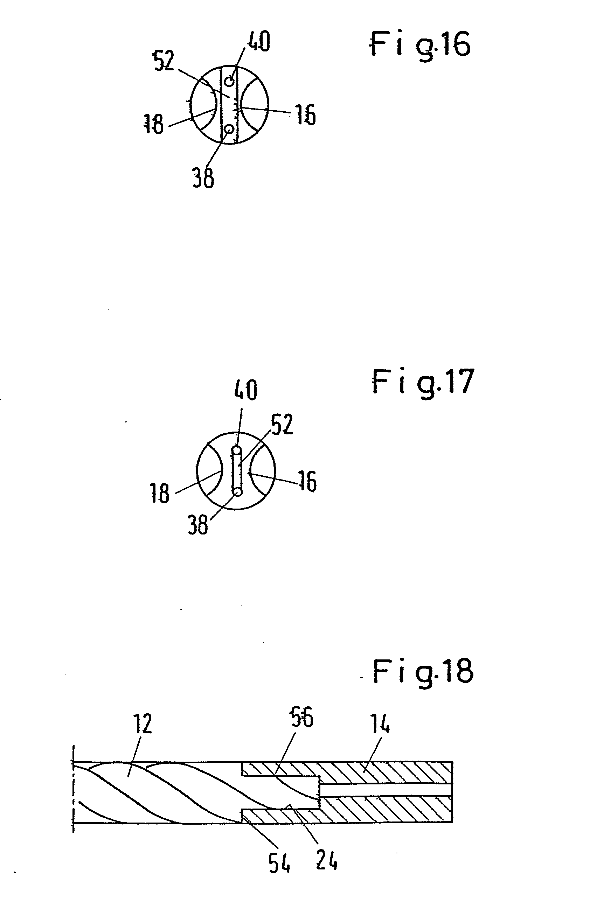

Für den Fall, daß das Kühlkanalübergangselement lediglich eine Öffnung aufweist, die die beiden Öffnungen der im Schneidteil 12 ausgebildeten Kühlkanäle 38, 40 nicht überdeckt, ist in der entsprechenden Stirnfläche 13 des Schneidteils 12 eine nutförmige Vertiefung als Kanalquerverbindung 52 ausgebildet, die sich gemäß Figur 16 über den gesamten Durchmesser des Schneidteils 12 erstreckt oder gemäß Figur 17 nur in dessen Mittelabschnitt ausgestaltet ist.

Bei einem Schneidteildurchmesser, der etwa dem des Schaftteils 14 entspricht, wird zur Verbindung beider Teile am der Bohrerspitze abgewandten Endabschnitt des Schneidteils 12 mittels einer radialen Abstufung 54 ein Montageabschnitt 56 ausgebildet, dessen Außendurchmesser dem Innendurchmesser der im Schaftteil 14 ausgebildeten Ausnehmung 24 entspricht. Eine derartige Ausführungsform ist in Figur 18 dargestellt.

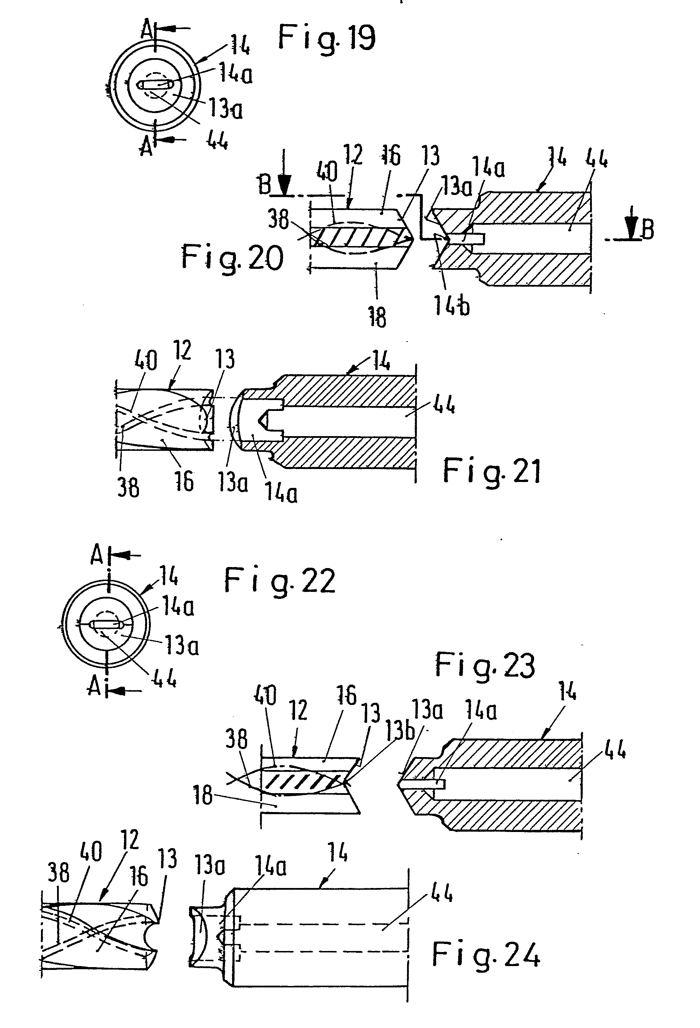

Das in Fig. 19 bis 21 gezeigte Schaftteil 14 ist am Übergangsabschnitt mit einer Stirnfläche 13a versehen, die mit einer hohlkeilartigen Ausnehmung 14b ausgestaltet ist. Die beiden, die Ausnehmung 14b ausbildenden ebenen Flächen schneiden sich in der Mitte einer Schlitzausnehmung 14a, die die Öffnungen, die die Kühlkanäle 38, 40 in der Stirnfläche 13 des Schneidteils 12 ausbilden, mit dem zentralen Kühlkanal 44 des Schaftteils 14 verbindet. Die Stirnflächen 13 und 13a sind untereinander verlötet, so daß ein Austritt von Kühlmittel in den durch die Spannuten 16, 18 gebildeten Spanraum ausgeschlossen ist. Eine wirksame Drehmomentübertragung wird durch den in Umfangsrichtung des Spiralbohrers bewirkten Formschluß gewährleistet, mit dem die prismenförmig gestaltete Spitze des Endabschnitts des Schneidteils 12 in die Ausnehmung 14b im Schaftteil 14 eingreift.

In den Fig. 22 bis 24 ist ein dem zuletzt geschilderten ähnlicher Spiralbohrer gezeigt, wobei hier an die Stelle der prismenförmigen Spitze des Schneidteils 12 die des Schaftteils 14 tritt an die der hohlkeilförmigen Ausnehmung 14b des Schaftteils 14 die Ausnehmung 13b des Schneidteils 12. Die Funktion und die Wirkung entspricht der vorher geschilderten.

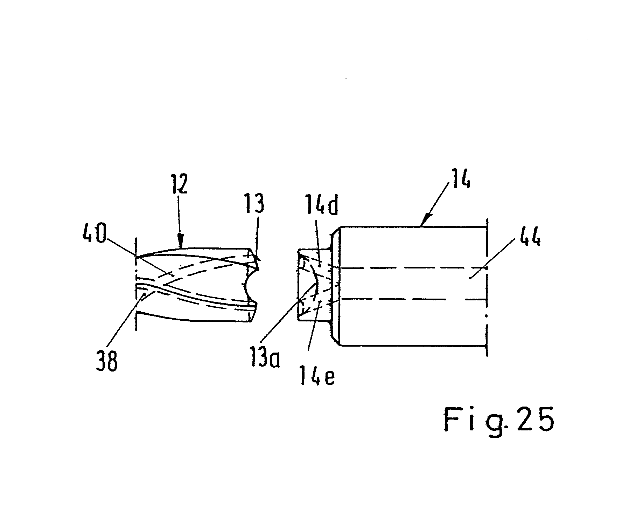

Fig. 25 zeigt eine alternive Anschlußmöglichkeit für die Kühlkanäle 38, 40 eines den in den Fig. 19 bis 24 dargestellten ähnlichen Spiralbohrers. Hierbei sind im Übergangsbereich zwischen dem Schaft- 14 und dem Schneidteil 12 statt der Schlitzausnehmung 14a Anschlußkanalabschnitte 14d, 14e ausgebildet, die jeden Kühlkanal 38, 40 einzeln mit dem Kühlkanal 44 des Schaftteils 14 verbinden.

Patentanwälte und
Vertreter beim EPA

0240765

Dipl.-Chem. Dr. B. Struif

Bavariaring 4, Postfach 20 24 03
8000 München 2
Tel.: 0 89 - 53 96 53
Telex: 5-24 845 tipat
Telecopier: 0 89 - 537377
cable: Germaniapatent München

12. März 1987
EP 6584

13

Patentansprüche

1. Spiralbohrer mit innenliegenden Kühlkanälen, aus einem Schaft- und einem Schneidteil, das zumindest zwei wendelförmige, einen Spanraum ausbildende Spannuten aufweist, dadurch gekennzeichnet, daß das Schneidteil (12) vollständig aus Hartmetall besteht, über seine gesamte Länge Spannuten (16, 18) hat und mit seinem der Bohrerspitze abgewandten Endabschnitt mittels an ihm und an dem der Bohrerspitze zugewandten Endabschnitt des Schaftteils (14) entsprechend ausgebildeter Stirnflächen (13, 13a) mit dem Schaftteil (14) verbunden ist, und daß die Kühlkanäle (38, 40, 44) mittels verlöteter Passungsflächen zwischen dem Schneid- (12) und dem Schaftteil (14) gegen den Spanraum abgedichtet sind.

2. Spiralbohrer nach Anspruch 1, dadurch gekennzeichnet, daß der der Bohrerspitze abgewandte Endabschnitt des Schneidteils (12 in eine angepaßte Ausnehmung (24) des Schaftteils (14) eingesetzt ist.

Dresdner Bank (München) Kto. 3939 844    Deutsche Bank (München) Kto. 286 1060    Postscheckamt (München) Kto. 670-43-804

H/15

3. Spiralbohrer nach Anspruch 2, dadurch gekennzeichnet, daß die Ausnehmung (24) des Schaftteils (14) zylindrisch unter Anpassung an den Außendurchmesser des Schneidteils (12) ausgebildet ist.

4. Spiralbohrer nach Anspruch 2 oder 3, dadurch gekennzeichnet, daß die Abdichtung über eine Stirnfläche (13) des Schneidteils (12) erfolgt, die flächig an eine entsprechend geformte Anlagefläche im Grund der Ausnehmung (24) anliegt.

5. Spiralbohrer nach Anspruch 4, dadurch gekennzeichnet, daß das Schaftteil (14) einen zentralen Kühlkanal (44) hat, dessen Durchmesser kleiner ist als der Kernquerschnitt des Schneidteils (12) und der beide Kühlkanäle (38, 40) des Schneidteils (12) anschließt, und daß die Anlagefläche vom Grund der Ausnehmung (24) gebildet ist.

6. Spiralbohrer nach einem der Ansprüche 2 bis 5, dadurch gekennzeichnet, daß die Stirnfläche (13) des Schneidteils (12) an einer Anlagefläche eines im Grund der Ausnehmung (24) des Schaftteils (14) angeordneten Kühlkanalübergangselements (28, 30, 32) liegt, durch das eine gerichtete Verzweigung des im Schaftteil (14) vorhandenen Kühlkanals (44) auf die im Schneidteil (12) vorliegenden Kühlkanäle (38, 40) hin erfolgt.

7. Spiralbohrer nach Anspruch 6, dadurch gekennzeichnet, daß die Kühlkanalöffnungen auf der Stirnfläche (13) des Schneidteils (12) einzeln an entsprechende Öffnungen des Kühlkanalübergangselements (28, 30, 32) angeschlossen sind.

8. Spiralbohrer nach Anspruch 5 oder 6, dadurch gekennzeichnet, daß die Kühlkanäle (38, 40) des Schneidteils (12) mittels einer auf seiner Stirnfläche (13) ausgebildeten radialen Kanalquerverbindung (52) verbunden sind.

9. Spiralbohrer nach Anspruch 5 oder 6, dadurch gekennzeichnet, daß das Kühlkanalübergangselement (32) in der Ausnehmung (24) formschlüssig aufgenommen ist und einen Schlitz (49) aufweist, in den die Kühlkanäle (38, 40) des Schneidteils (12) münden.

10. Spiralbohrer nach einem der Ansprüche 2 bis 9, dadurch gekennzeichnet, daß zwischen Schneid- (12) und Schaftteil (14) nahe der Öffnungsfläche der Ausnehmung (24) eine Schicht Klebstoff eingebracht ist, die die Spannuten (16, 18) ausfüllt.

11. Spiralbohrer nach einem der Ansprüche 2 bis 10, dadurch gekennzeichnet, daß die Ausnehmung (24) mit einem wendelförmigen Innengewindeabschnitt (15) ausgebildet ist, in dem sie einen entsprechenden Abschnitt des Schneidteils (12) formschlüssig aufnimmt.

12. Spiralbohrer nach Anspruch 11, dadurch gekennzeichnet, daß sich der Innengewindeabschnitt (15) über die gesamte axiale Länge der Ausnehmung (24) erstreckt.

13. Spiralbohrer nach einem der Ansprüche 2 bis 10, dadurch gekennzeichnet, daß die Ausnehmung (24) durch eine Trennplatte (26) geschlossen ist, die in bezug auf die Öffnungsfläche der Ausnehmung (24) den negativen Schneidteilquerschnitt aufweist.

14. Spiralbohrer nach Anspruch 13, dadurch gekennzeichnet, daß die Trennplatte (26) einstückig mit dem Schaftteil (14) ausgebildet ist.

15. Spiralbohrer nach Anspruch 13, dadurch gekennzeichnet, daß die Trennplatte (26) separat ausgebildet und fest mit dem Schaftteil (14) verbunden ist.

16. Spiralbohrer nach Anspruch 1, dadurch gekennzeichnet, daß die aneinander anliegenden Stirnflächen (13 bzw. 13a) des Schneid- (12) bzw. des Schaftteils (14) als Passungsflächen derart jeweils durch einander schneidende Ebenen gebildet sind, daß Schaft- (14) und Schneidteil (12) in Umfangsrichtung formschlüssig verbindbar sind, wobei der Kühlkanal (44) des Schaftteils (14) durch den Endabschnitt des Schaftteils (14) mit den einzelnen Kühlkanälen (38, 40) des Schneidteils (12) verbunden ist.

17. Spiralbohrer nach Anspruch 16, dadurch gekennzeichnet, daß die Stirnfläche (13) des Schneidteils (12) prismenartig vorsteht und in eine entsprechend ausgebildete Ausnehmung (14b) in der Stirnfläche (13a) des Schaftteils (14) einragt.

18. Spiralbohrer nach Anspruch 16, dadurch gekennzeichnet, daß die Stirnfläche (13a) des Schaftteils (14) prismenartig vorsteht und in eine entsprechend ausgebildete Ausnehmung (13a) in der Stirnfläche (13) des Schneidteils (12) einragt.

19. Spiralbohrer nach einem der Ansprüche 16 bis 18, dadurch gekennzeichnet, daß zum Anschluß der Kühlkanäle (38, 40) des Schneidteils (12) an den Kühlkanal (44) des Schaftteils (14) im Endabschnitt des Schaftteils (14) eine Schlitzausnehmung (14a) vorgesehen ist, durch die der Kühlkanal (44) des Schaftteils (14) auf die einzelnen Kühlkanäle (38, 40) des Schneidteils (12) erweitert ist.

20. Spiralbohrer nach einem der Ansprüche 16 bis 18, dadurch gekennzeichnet, daß zum Anschluß der Kühlkanäle (38, 40) des Schneidteils (12) an den Kühlkanal (44) des Schaftteils (14) im Endabschnitt des Schaftteils (14) Anschlußkanalabschnitte (14d, 14e) vorgesehen sind, von denen jeder vom Kühlkanal (44) auf einen der Kühlkanäle (38, 40) zuläuft.

21. Spiralbohrer nach einem der Ansprüche 11 bis 15, dadurch gekennzeichnet, daß der die Ausnehmung (24) bildende Abschnitt des Schaftteils (14) ein Gußkörper ist.

22. Spiralbohrer nach einem der Ansprüche 11 bis 15, dadurch gekennzeichnet, daß das Schaftteil (14) ein Gußkörper ist.

Fig.1

Fig. 2

Fig. 3

Fig. 4

Fig. 5

4/9

Fig. 6

Fig. 7

Fig. 8

Fig. 9

Fig.10

Fig.11

Fig.12

Fig.13

0240765

Fig. 14

40  12  38  32  14

44

24  49

Fig. 15

49
32

Fig.16

Fig.17

Fig.18

Fig. 19

Fig. 20

Fig. 21

Fig. 22

Fig. 23

Fig. 24

Fig. 25